Europäisches Patentamt

(19) European Patent Office

Office européen des brevets

(11) Publication number: **0 200 329**
**A1**

# (12) EUROPEAN PATENT APPLICATION

(21) Application number: 86302017.8

(22) Date of filing: 19.03.86

(51) Int. Cl.⁴: **B 29 C 65/14**
**B 29 C 65/10, B 29 C 65/16**

(30) Priority: 20.03.85 ZA 852081

(43) Date of publication of application:
05.11.86 Bulletin 86/45

(84) Designated Contracting States:
AT BE CH DE FR GB IT LI LU NL SE

(71) Applicant: Hall, Alethea Rosalind Melanie
40 Driefontein Muldersdrift
Krugersdorp Transvaal(ZA)

(72) Inventor: Hall, Alethea Rosalind Melanie
40 Driefontein Muldersdrift
Krugersdorp Transvaal(ZA)

(74) Representative: Massey, Alexander
MARKS & CLERK Suite 301 Sunlight House Quay Street
Manchester, M3 3JY(GB)

(54) Method of joining sheets of a non-magnetic material together.

(57) A method and apparatus for joining two sheets of a plastics material together along a join line are disclosed. In terms of the method, the sheets are located in a zone between a magnet (28) and a body (12) which is attracted to the magnet (28) to bring the sheets together. The sheets are caused to be moved through the zone and are joined together in the zone or immediately after they have passed through the zone. The sheets are joined to each other by heat welding using a heat source (32) such as an infra-red light (32) which does not physically contact the sheets. The apparatus includes the magnet (28) and body (12), and the heat source (32).

FIG.1

0200329

-1-

"METHOD OF JOINING SHEETS OF A NON-MAGNETIC MATERIAL TOGETHER"

## BACKGROUND OF THE INVENTION

This invention relates to a method of joining sheets of a plastics material to one another by heat welding and to apparatus for use in such a method.

United States Patent No. 4,478,659 discloses a method of joining two sheets of a non-magnetic material together along a join line, which includes the steps of locating the sheets in a zone between a magnet and a body which is attracted by the magnet to bring the sheets together, causing the sheets to be moved through the zone, and joining the sheets together in the zone or immediately after the sheets have passed through the zone. Various methods of joining the sheets to each other are disclosed such as sewing, glueing, heat welding or ultrasonic welding.

It is an object of the present invention to provide an improved method of joining the sheets to each other.

- 2 -                                    0200329

## SUMMARY OF THE INVENTION

According to the invention, a method of joining two sheets of a plastics material together along a join line which comprises the steps of locating the sheets in a zone between a magnet and a body which is attracted by the magnet to bring the sheets together, causing the sheets to be moved through the zone, and joining the sheets together in the zone or immediately after the sheets have passed through the zone is characterised in that the sheets are joined to each other by means of heat welding using a heat source and in that during the heat welding, the heat source used does not physically contact the sheets.

The method set out above may obviously also be used to join more than two sheets of a plastics material together along a join line.

According to another aspect of the invention a method of joining a first sheet of two sheets of a plastics material which are joined to each other along a join line, to a third sheet of a plastics material along a join line which comprises the steps of locating the three sheets close to a magnet with the third sheet adjacent the first sheet, locating a body which is attracted by the magnet between the first sheet and the second sheet so that the first sheet and the third sheet are brought together in a zone between the magnet and the body with the second sheet below the body, causing the first sheet and the third sheet to be moved through the zone, and joining the third sheet to the first sheet in the zone or immediately after the third sheet and the first sheet have passed through the zone to form the join line, is characterised in that the third sheet is joined to the first sheet by means of heat welding using a heat source and in that during the heat welding, the heat source used does not physically contact the sheets.

0200329

According to a further aspect of the invention, apparatus for use in a method of joining two sheets of a plastics material together along a join line which comprises a magnet and a body which is attracted by the magnet defining between them a gap in which the sheets may be located, and joining means located immediately after the gap for joining the sheets together is characterised in that the joining means comprises a heat source which is adapted to join the sheets to each other by heat welding without physically contacting the sheets.

The heat source may be any suitable heat source which can cause heat welding in two sheets of a plastics material, without contacting the sheets. Suitable heat sources include an infra-red light, an ultra-violet light, a gas jet, or a laser. The heat source is preferably a 1kW or 2 kW infra-red light with a narrow beam.

BRIEF DESCRIPTION OF THE DRAWINGS

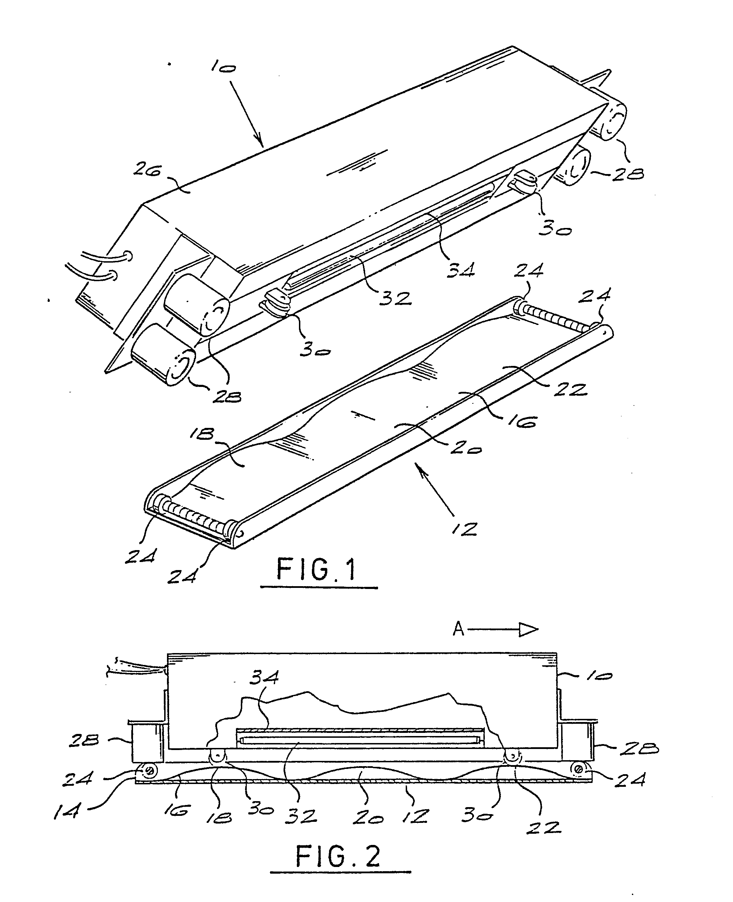

Figure 1 is an exploded view of apparatus according to the invention; and
Figure 2 is a partially sectioned side view of the apparatus of Figure 1.

DESCRIPTION OF PREFERRED EMBODIMENTS

Referring to the drawings, the apparatus of the invention comprises a welding head 10 and a shuttle 12.

The shuttle 12 comprises a U-shaped channel section 14 in which is located a strip 16 of spring steel so that the strip 16 has three bumps 18, 20 and 22. The shuttle 12 also includes four roller bearings 24.

The welding head 10 comprises a casing 26 to which are attached four magnets 28 which are in register with the four roller bearings 24, to hold the shuttle 12 by magnetic attraction to the welding head 10. The welding head 10 also includes two roller wheels 30 which are in register with the two bumps 18 and 22. Running the length of the welding head 10 is an infra-red light 32 located in a parabolic reflector 34 which is designed to focus the light's beam to so that it is approximately 4mm wide. The welding head 10 further includes various electrical connections which are not shown.

The use of the apparatus to join two sheets of a plastics material to each other will now be described. The two sheets are located between the welding head 10 and the shuttle 12. The sheets are held stationary while the welding head 10 and shuttle 12 move, for example, in the direction of arrow A. When the sheets pass through the zone of the light 32 they are heated up by the infra-red rays of the light 32. The sheets then pass between the roller wheel 30 and the bump 22 and are forced into contact thus forming the weld.

It can be seen that as the welding head 10 includes roller wheels 30 located on both sides of the light 32. Thus, the welding head 10 and shuttle 12 may be moved either in the direction of the arrow A along the sheets or alternatively in the opposite direction along the sheets, with heat welding occurring in both cases.

The advantage of heat welding is that it is simple and effective and a very good weld or seal is achieved. The advantage of using a heat source which does not contact the sheets is that the danger of damaging the sheets is minimised.

CLAIMS:                                                    0200329

1.

A method of joining two sheets of a plastics material together along a join line which comprises the steps of locating the sheets in a zone between a magnet (28) and a body (12) which is attracted by the magnet (28) to bring the sheets together, causing the sheets to be moved through the zone, and joining the sheets together in the zone or immediately after the sheets have passed through the zone is characterised in that the sheets are joined to each other by means of heat welding using a heat source (32) and in that during the heat welding the heat source (32) used does not physically contact the sheets.

2.

A method according to claim 1 wherein the heat source (32) is selected from an infra-red light, an ultra-violet light, a gas jet, or a laser.

3.

A method according to claim 2 wherein the heat source (32) comprises an infra-red light with a narrow beam.

4.

A method of joining a first sheet of two sheets of a plastics material which are joined to each other along a join line, to a third sheet of a plastics material along a join line which comprises the steps of locating the three sheets close to a magnet (28) with the third sheet adjacent the first sheet, locating a body (12) which is attracted by the magnet (28) between the first sheet and the second sheet so that the first sheet and the third sheet are brought together in a zone between the magnet (28) and the body (12) with the second sheet below the body (12), causing the first sheet and the third sheet to be moved through the zone, and joining the third sheet to the first sheet in the zone or immediately after the third sheet and the first sheet have passed through the zone to form the join line, is characterised in that the third sheet is joined to the first sheet by means of heat welding using a heat source (32) and in that during the heat welding the heat source (32) used does not physically contact the sheets.

5.

A method according to claim 4 wherein the heat source (32) is selected from an infra-red light, an ultra-violet light, a gas jet and a laser.

6.

A method according to claim 5 wherein the heat source (32) comprises an infra-red light with a narrow beam.

7.

Apparatus for use in a method of joining two sheets of a plastics material together along a join line which comprises a magnet (28) and a body (12) which is attracted by the magnet (28) defining between them a gap in which the sheets may be located, and joining means (32) located immediately after the gap for joining the sheets together is characterised in that the joining means (32) comprises a heat source (32) which is adapted to join the sheets to each other by heat welding without physically contacting the sheets.

8.

Apparatus according to claim 7 wherein the heat source (32) is selected from an infra-red light, an ultra-violet light, a gas jet and a laser.

9.

Apparatus according to claim 8 wherein the heat source (32) is an infra-red light or an ultra-violet light which is located in a parabolic reflector (34) adapted to focus the infra-red beam or the ultra-violet beam onto the sheets along the join line.

0200329

FIG.1

FIG.2

## EUROPEAN SEARCH REPORT

| | DOCUMENTS CONSIDERED TO BE RELEVANT | | EP 86302017.8 |
|---|---|---|---|

| Category | Citation of document with indication, where appropriate, of relevant passages | Relevant to claim | CLASSIFICATION OF THE APPLICATION (Int. Cl.4) |
|---|---|---|---|
| Y | US – A – 3 384 526 (ABRAMSON) <br> * Totality * | 1–3,7–9 | B 29 C 65/14 <br> B 29 C 65/10 |
| A | | 4–6 | B 29 C 65/16 |
| Y | DE – B2 – 2 743 315 (WEHINGER) <br> * Totality * | 1–3,7–9 | |
| A | DE – B2 – 2 230 090 (LEHMACHER) <br> * Totality * | 1–9 | |
| A | DE – C – 938 499 (SIEMENS) <br> * Totality * | 1–3,7–9 | |
| A | DE – A1 – 2 725 463 (GRACE) <br> * Totality * | 1,2,4,5,7,8 | **TECHNICAL FIELDS SEARCHED (Int. Cl.4)** |
| A | DE – B2 – 1 939 571 (BASF) <br> * Totality * | 1,2,4,5,7,8 | B 29 C |

The present search report has been drawn up for all claims

| Place of search | Date of completion of the search | Examiner |
|---|---|---|
| VIENNA | 17-07-1986 | REININGER |